**Europäisches Patentamt**

**European Patent Office**

**Office européen des brevets**

(11) Veröffentlichungsnummer: **0 120 418**
A1

## (12) EUROPÄISCHE PATENTANMELDUNG

(21) Anmeldenummer: **84102872.3**

(22) Anmeldetag: **15.03.84**

(51) Int. Cl.³: **H 04 M 1/02**
**H 04 M 1/72**

(30) Priorität: **18.03.83 DE 3309832**

(43) Veröffentlichungstag der Anmeldung:
**03.10.84 Patentblatt 84/40**

(84) Benannte Vertragsstaaten:
**AT CH DE LI NL**

(71) Anmelder: **Siemens Aktiengesellschaft**
**Berlin und München Wittelsbacherplatz 2**
**D-8000 München 2(DE)**

(72) Erfinder: **Schön, Siegfried**
**Tulpenweg 10**
**D-8130 Starnberg(DE)**

(54) **Schnurloses Telefon.**

(57) Die Erfindung bezieht sich auf ein schnurloses Telefon mit einer Sende- und Empfangseinrichtung zur Herstellung der Verbindung zu einer ortsfesten Station bzw. zu einer internen oder öffentlichen Vermittlungseinrichtung. Aufgabe der Erfindung ist es, ein schnurloses Telefon aufzuzeigen, das teschengerechte Form aufweist. Gelöst wird die Aufgabe dadurch, daß das Telefon einen aufklappbaren Deckel (4) aufweist, unter welchem die Wähleinrichtung (3) angeordnet ist. (Abb.)

EP 0 120 418 A1

SIEMENS AKTIENGESELLSCHAFT
Berlin und München

0120418

Unser Zeichen
VPA 83 P 1159 E

5 Schnurloses Telefon

Die Erfindung betrifft ein schnurloses Telefon mit einer Sende- und Empfangseinrichtung zur Herstellung der Verbindung zu einer ortsfesten Station bzw. zu einer internen oder öffentlichen Vermittlungseinrichtung.

Schnurlose Telefone sind bekannt. Im Gegensatz zu bekannten Infrarot-Telefonen bedienen sich diese Telefone des Funks. Die Telefone weisen dabei in etwa die Form eines normalen Handapparatekörpers für übliche Telefonstationen auf, wobei das Wählorgan in dem Handapparatekörper untergebracht ist. Durch diese Form bedingt sind diese Telefone nur in beschränktem Ausmaß mitnehmbar.

Aufgabe der Erfindung ist es, ein schnurloses Telefon aufzuzeigen, das taschengerechte Form aufweist.

Gemäß der Erfindung wird die Aufgabe dadurch gelöst, daß das Telefon einen aufklappbaren Deckel aufweist, unter welchem die Wähleinrichtung angeordnet ist.

Durch den aufklappbaren Deckel ist in dessen geschlossenem Zustand eine Bedienung der Wähleinrichtung ausgeschlossen. Das Gerät kann somit leicht in Rocktaschen oder dergleichen untergebracht werden.

Es ist zweckmäßig, daß der Deckel durch die Bedienung einer seitlich am Gehäuse des Telefons versenkt angeordnete Drucktaste entriegelbar ist.

GS 1 Hus / 15.03.1983

Durch eine derartige Anordnung ist ein versehentliches Betätigen der Taste ausgeschlossen.

Vorteilhaft ist es, wenn der Tonruf und das Hörorgan im freien, nicht verschließbarem Teil des Gehäuses angeordnet ist.

Zweckmäßig ist es, daß durch das Öffnen des Deckels das Telefon von Rufen auf Hören umschaltbar ist. Der Deckel kann somit neben der Abdeckfunktion der Wähleinrichtung auch eine Reihe von Umschaltefunktionen erfüllen. Durch die Verwendung desselben Wandlers für Hören und Rufen wird ein Wandler eingespart.

Weiterhin ist es vorteilhaft, daß unterhalb des Deckels des Telefons ein Mikrofon angeordnet ist. Das Mikrofon ist somit nur zugänglich, wenn der Deckel geöffnet ist. Es ist somit vor Verschmutzung geschützt.

Zur Erleichterung der Schallführung ist es vorteilhaft, wenn das Mikrofon im Bereich des Scharniers des Deckels angeordnet ist.

Zweckmäßigerweise ist der Innenwinkel bei geöffnetem Deckel kleiner als 180°, um die Schallführung zu verbessern. Er kann insbesondere 140° betragen, wobei das Mikrofon über Schallführungskanäle zugänglich ist.

Es ist zweckmäßig, daß die Schallführungskanäle durch Querschnittsverminderungen am Scharnier des Deckels gebildet sind.

Aus sendetechnischen Gründen ist es vorteilhaft, daß im Randbereich des Deckels eine Antenne angeordnet ist, durch die die bereits im Gehäuse angeordnete Antenne bei geöffnetem Deckel erweiterbar ist. Der Deckel erfüllt somit eine weitere Umschaltefunktion.

Um die Bedienung des schnurlosen Telefons zu erleichtern, ist es zweckmäßig, daß auf der Innenseite des Deckels eine Bedienungsanleitung angebracht ist.

Um die gewählten Nummern sowie den Ladezustand des Gerätes zu kontrollieren, ist es zweckmäßig, daß oberhalb des Wählorgans eine optische Anzeigevorrichtung, insbesondere ein Display angeordnet ist, die durch den Deckel nicht verschließbar ist.

Die Ladung des Gerätes kann in vorteilhafter Weise dadurch erfolgen, wenn unterhalb des Scharniers Kontakte zur Ladung des Telefons angeordnet sind, an die ein Ladegerät anschließbar ist.

Im folgenden sei die Erfindung anhand einer Abbildung näher erläutert.

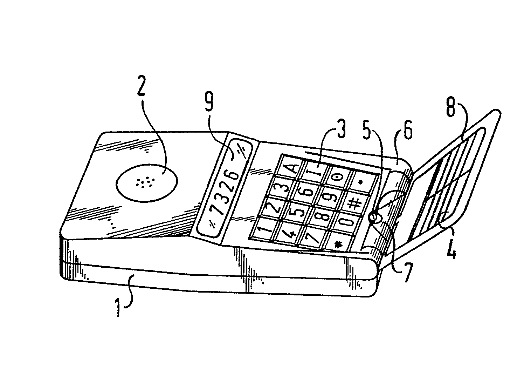

Die Abbildung zeigt ein schnurloses Telefon in perspektivischer Darstellung.

Das Gerät besteht aus einem zweiteiligen Grundkörper 1, wobei der Tonruf und das Hörorgan 2 im oberen Teil ähnlich der Hörmuschel eines normalen Handapparatekörpers angeordnet sind. Im unteren Teil des Gerätes ist die Wähleinrichtung 3 angeordnet, die durch einen Deckel 4 verschließbar ist. In der gezeigten Stellung ist eine Öffnung 5 für ein Mikrofon sichtbar, das über Schallführungskanäle 7 im Bereich des Scharniers 6 zugänglich ist. Der Deckel 4 ist mit einem Antennenrahmen 8 versehen, der zu einer im Grundkörper 1 bereits vorhandenen Antenne zuschaltbar ist. Die Zuschaltung wird durch Öffnen des Deckels 4 erreicht. Das Öffnen bzw. die Entriegelung des Deckels 4 wird durch eine seitlich am Grundkörper versenkt angeordnete Taste vorgenommen (nicht gezeigt). Im Bereich zwischen Tonruf bzw. Hörmuschel und der Wähleinrichtung ist in abgewinkelter Stellung ein Display 9 angeordnet, das durch den Deckel nicht verdeckbar ist.

14 Patentansprüche
1 Figur

Patentansprüche

1. Schnurloses Telefon mit einer Sende- und Empfangseinrichtung zur Herstellung der Verbindung zu einer ortsfesten Station bzw. zu einer internen oder öffentlichen Vermittlungseinrichtung, d a d u r c h   g e k e n n - z e i c h n e t , daß das Telefon einen aufklappbaren Deckel (4) aufweist, unter welchem die Wähleinrichtung (3) angeordnet ist.

2. Schnurloses Telefon nach Anspruch 1, d a d u r c h g e k e n n z e i c h n e t , daß der Deckel durch die Bedienung einer seitlich am Gehäuse des Telefons versenkt angeordnete Drucktaste entriegelbar ist.

3. Schnurloses Telefon nach Anspruch 1, d a d u r c h g e k e n n z e i c h n e t , daß der Tonruf und das Hörorgan (2) im freien, nicht verschließbarem Teil des Gehäuses angeordnet sind.

4. Schnurloses Telefon nach Anspruch 1 und 3, d a - d u r c h   g e k e n n z e i c h n e t , daß durch das Öffnen des Deckels (4) das Telefon von Rufen auf Hören umschaltbar ist.

5. Schnurloses Telefon nach Anspruch 1, d a d u r c h g e k e n n z e i c h n e t , daß unterhalb des Deckels (4) des Telefons ein Mikrofon (Öffnung 5) angeordnet ist.

6. Schnurloses Telefon nach Anspruch 1 und 5, d a - d u r c h   g e k e n n z e i c h n e t , daß das Mikrofon im Bereich des Scharniers (6) des Deckels (4) angeordnet ist.

0120418

7. Schnurloses Telefon nach Anspruch 5 und 6, d a -
d u r c h   g e k e n n z e i c h n e t , daß der Innenwinkel bei geöffnetem Deckel kleiner als 180$^{o}$ ist, insbesondere etwa 140$^{o}$ beträgt und das Mikrofon über Schallführungskanäle (7) zugänglich ist.

8. Schnurloses Telefon nach Anspruch 7, d a d u r c h
g e k e n n z e i c h n e t , daß die Schallführungskanäle (7) durch Querschnittsverminderungen am Scharnier
(6) des Deckels (4) gebildet sind.

9. Schnurloses Telefon nach Anspruch 1, d a d u r c h
g e k e n n z e i c h n e t , daß im Randbereich des
Deckels (4) eine Antenne (8) angeordnet ist, durch die
die bereits im Gehäuse angeordnete Antenne bei geöffnetem
Deckel erweiterbar ist.

10. Schnurloses Telefon nach Anspruch 1, d a d u r c h
g e k e n n z e i c h n e t , daß auf der Innenseite des
Deckels (4) eine Bedienungsanleitung angebracht ist.

11. Schnurloses Telefon nach Anspruch 1, d a d u r c h
g e k e n n z e i c h n e t , daß oberhalb des Wählorgans (3) eine optische Anzeigevorrichtung (9), insbesondere ein Display angeordnet ist, die durch den Deckel
(4) nicht verschließbar ist.

Europäisches
Patentamt

EUROPÄISCHER RECHERCHENBERICHT

**0120418**
Nummer der Anmeldung

EP 84 10 2872

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 070 392 (STC) <br> * Insgesamt * <br><br> --- | 1 | H 04 M 1/02 <br> H 04 M 1/72 |
| A | DE-A-2 726 601 (SIEMENS) <br> * Seite 8, Zeile 23 - Seite 10, Zeile 4; Figuren * <br><br> --- | 1,2 | |
| P,A | US-A-4 396 810 (COVER) <br> * Spalte 2, Zeile 64 - Spalte 4, Zeile 54; Figuren * <br><br> --- | 1 | |
| A | FR-A-2 299 770 (ELMEG) <br> * Seite 4, Zeile 21 - Seite 7, Zeile 16; Figuren * <br><br> ----- | 1,4,7 | |

**RECHERCHIERTE SACHGEBIETE (Int. Cl. ³)**

H 04 M

Der vorliegende Recherchenbericht wurde für alle Patentansprüche erstellt.

| Recherchenort <br> DEN HAAG | Abschlußdatum der Recherche <br> 15-06-1984 | Prüfer <br> KEPPENS P.M.R. |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503. 03.82